# EUROPÄISCHE PATENTSCHRIFT

(11) **EP 2 672 805 B1**
(45) Veröffentlichungstag und Bekanntmachung des Hinweises auf die Patenterteilung: **20.05.2015**
(21) Anmeldenummer: 12717038.9
(22) Anmeldetag: 08.02.2012
(51) Int. Cl.: A01D 87/00, E02F 3/40, E02F 3/407

(54) **LADEEINRICHTUNG FÜR LANDWIRTSCHAFTLICHES TRANSPORTGUT**
DEVICE FOR LOADING AGRICULTURAL GOODS TO BE TRANSPORTED
DISPOSITIF DE CHARGEMENT POUR MARCHANDISES AGRICOLES

(30) Priorität: 09.02.2011 DE 102011010788
(43) Veröffentlichungstag der Anmeldung: 18.12.2013
(73) Patentinhaber: Bäuscher, Robin, 65439 Flörsheim (DE)
(72) Erfinder: Bäuscher, Robin, 65439 Flörsheim (DE)
(74) Vertreter: Weilnau, Carsten
(86) Internationale Anmeldenummer: PCT/EP2012/000571
(87) Internationale Veröffentlichungsnummer: WO 2012/107223

(56) Entgegenhaltungen:
- WO-A2-2006/060065
- DE-U1- 9 208 389
- US-A- 3 048 292
- US-A- 5 603 382

## Beschreibung

Die vorliegende Erfindung betrifft eine Ladeeinrichtung für landwirtschaftliches Transportgut, die vorzugsweise an einen Frontlader oder Radlader ankoppelbar ist und die einen kontrollierten Austrag aufgenommenen Transportguts ermöglicht.

Frontlader, Bagger oder Radlader weisen üblicherweise einen Hydraulikarm auf, an dessen vorderen Ende eine Ladeeinrichtung, wie z. B. eine Radlader- oder Baggerschaufel schwenkbar angeordnet ist, um einerseits Schüttgut aufzunehmen und andererseits aufgenommenes Schüttgut, etwa durch eine nach unten gerichtete schwenk- oder Kippbewegung wieder abzukippen.

Insbesondere beim Beladen von Anhängern oder zum Aufhäufen von Transportgut es erforderlich, die mit Schüttgut beladene Schaufel über eine Lade- oder Bordwandkante hinwegzuheben und in dieser angehobenen Stellung zum Entladen nach unten zu kippen. Hierbei ist die Schwenkachse der Lade- oder Baggerschaufel auf ein Höhenniveau anzuheben, welches deutlich oberhalb der Bordwandkante liegt. Zum Beladen von relativ hoch bauenden Anhängern und dementsprechend hohen Bordwänden ist daher die Verwendung eines entsprechend groß dimensionierten Front- oder Radladers erforderlich. Deren Anschaffung ist jedoch für landwirtschaftliche Betriebe meist unrentabel.

Ferner sind im Stand der Technik bereits Abschiebeschaufeln bekannt, die anstelle einer nach unten gerichteten Kipp- oder Schwenkbewegung der Schaufel eine Fördereinrichtung zum Abschieben des aufgenommenen Schüttguts aufweisen. Eine solche ist z. B. in der DE 92 08 389 U1 beschrieben. Hierbei wird ein Schiebeschild unmittelbar von der Rückwand eines Aufnahmeraums gebildet, wobei für den Schiebeschild ein Hydraulikantrieb mit einem Koppelgetriebe vorgesehen ist. Die für das Koppelgetriebe vorgesehenen Schwenkhebel sind dabei über jeweils ein im oberen Bereich von Seitenblechen vorgesehenes Schwenklagerteil abgestützt, wobei ein Hydraulikzylinder ebenfalls im oberen Bereich von Seitenblechen angeordnet ist.

Eine derartige Konstruktion ist relativ aufwendig sowie arbeits- und kostenintensiv in der Fertigung und Herstellung. Zudem wird über das über den Laderaum hinausragende Koppelgetriebe der Schwerpunkt einer solchen Schaufel nach oben verlagert. Auch ist ein solches Koppelgetriebe u. U. recht störanfällig und wartungsintensiv.

Seine oben am Laderaum vorgesehene Anordnung schränkt die Flexibilität solcher Schiebeschaufeln mitunter erheblich ein.

So ist aus der DE 92 08 389 U1 ferner eine Ladeschaufel mit einem als Rückwand ausgebildeten Schiebeschild bekannt. Ein zugehöriger Schiebemechanismus sieht dabei einen oben an der Ladeschaufel schwenkbar angelenkten Hydraulikzylinder vor, der über einen drehbar gelagerten Schwenkhebel mit dem Schiebeschild gekoppelt ist.

Zudem ist aus der US 3,163,304 A eine Ladeschaufel bekannt, bei welcher ein Hydraulikzylinder über eine Kurbel eine Dreh- oder Schiebebewegung eines mit einem Schiebeschild verbundenen Gestänges bewirken kann.

Schließlich ist aus der DE 40 14 283 A1 eine absenkbare Fräsvorrichtung bekannt, die in den Fassungsbereich einer Schaufel eines Kompostaufbereitungsgeräts hineingeführt werden kann.

Es ist daher Aufgabe der vorliegenden Erfindung, eine verbesserte Ladeeinrichtung für landwirtschaftliches Transportgut bereitzustellen, die einen einfachen und platzsparenden Aufbau aufweist, die besonders kostengünstig und einfach herzustellen ist und die schließlich eine hohe Funktionssicherheit aufweist sowie einen funktionssicheren wartungsarmen Langzeitbetrieb ermöglicht.

Diese der Erfindung zugrunde liegende Aufgabe wird mittels einer Ladeeinrichtung gemäß Patentanspruch 1 gelöst, wobei vorteilhafte Weiterbildungen der Erfindung Gegenstand der abhängigen Patentansprüche sind.

Die erfindungsgemäße Ladeeinrichtung ist für landwirtschaftliches Transportgut, insbesondere für Schüttgut, wie etwa Futtermittel, Tierdung, Saatgut sowie für landwirtschaftliche Produkte, wie z. B. Getreide, Kies, Sand, Torf, Rindenmulch, Erdaushub, Dung, Substrate sowie Gärreste und dergleichen ausgebildet. Die Ladeeinrichtung weist eine Schaufelvorrichtung auf, die zur Bildung eines Laderaums einen, eine vordere Ladekante aufweisenden Ladeboden und zwei seitlich hieran angrenzende Wangen sowie eine als Schiebeschild ausgebildete Rückwand aufweist. Die seitlichen Wangen erstrecken sich hierbei oberhalb und an gegenüberliegenden Seiten des Ladebodens. Die Rückwand ist ferner zwischen einer der Ladekante abgewandten Ausgangsstellung und einer der Ladekante zugewandten Abladestellung an den gegenüberliegenden Wangen verschiebbar geführt.

Zudem ist ein Schiebemechanismus vorgesehen, der wenigstens einen im Wesentlichen parallel zum Ladeboden ausgerichteten Hydraulikzylinder aufweist. Ladeboden, Seitenwände und Rückwand erstrecken sich bevorzugt jeweils im Wesentlichen senkrecht zueinander, sodass der von den genannten Komponenten gebildete Laderaum eine im Wesentlichen kubische Gestalt aufweist.

Dadurch dass der zumindest eine Hydraulikzylinder des Schiebemechanismus unmittelbar mit der Rückwand in mechanischer Wirkverbindung steht, kann auf die Implementierung eines Koppelgetriebes in vorteilhafter Weise verzichtet werden. Insbesondere kann der oberhalb der Seitenwangen bzw. oberhalb der Rückwand liegende Bauraum anderweitig genutzt werden. Auch kann durch die unmittelbar hinter der Rückwand liegende Anordnung wenigstens eines Hydraulikzylinders der Schwerpunkt der Ladeeinrichtung nach unten verlagert werden, was sich für die Ankopplung der Ladeeinrichtung an einen Front- oder Radlager als vorteilhaft erweist.

Hierbei ist insbesondere vorgesehen, dass der Schiebemechanismus zumindest zwei mit Ihren jeweiligen Zylinderabschnitten unmittelbar miteinander gekoppelte, bevorzugt unmittelbar miteinander verbundene Hydraulikzylinder aufweist, die zueinander im Wesentlichen entgegengesetzt ausgerichtet sind. Das heißt, dass eine Kolbenstange eines ersten Hydraulikzylinders z. B. in Richtung der Ladekante ausfährt, während eine zweite Kolbenstange eines zweiten Zylinders in eine der Ladekante entgegengesetzte Richtung ausfährt.

Hierdurch kann eine besonders platzsparende Anordnung des gesamten Schiebemechanismus erreicht werden. Der Gesamthub des Schiebemechanismus addiert sich sozusagen aus der Summer der Hübe der beiden Kolbenstangen von erstem und zweitem Hydraulikzylinder. Hierdurch kann eine besonders platzsparende und vergleichsweise simple Anordnung eines Schiebemechanismus erreicht werden, wobei die zugehörigen Hydraulikzylinder direkt in Verschieberichtung des Schiebeschilds ausgerichtet sein können. Eine kinematische Umlenkung und Kraftübertragung ist somit kaum mehr nötig.

Nach einer vorteilhaften Ausgestaltung der Erfindung ist insbesondere vorgesehen, dass die Rückwand translatorisch und/oder geradlinig an den gegenüberliegenden Wangen geführt ist.

Die Wangen weisen in Weiterbildung hiervon zumindest ein sich in Verschieberichtung erstreckendes Führungsprofil auf, welches mit zumindest einer korrespondierenden, seitlich an der Rückwand vorgesehenen Profilaufnahme in Eingriff steht. Von Vorteil erstreckt sich das an den Seitenwangen vorgesehene Führungsprofil nach innen, in den Laderaum und weist ein im Querschnitt etwa rechteckiges Profil auf. Dementsprechend sind die hiermit korrespondierenden rückwandseitigen Profilaufnahmen bevorzugt nach Art eines U- oder C-Profils ausgebildet.

Des Weiteren ist vorgesehen, dass der Ladeboden im Wesentlichen eben ausgebildet ist, sodass zum Überführen der Rückwand von einer hinteren Ausgangsstellung in die vorn liegende Abladestellung der Schiebeschild lediglich entlang einer Richtung bewegt werden muss. Von Vorteil weist die Rückwand im Bereich ihrer an die Seitenwangen und/oder an den Ladeboden angrenzenden Seitenrändern eine oder mehrere Dichtlippen auf, die für ein rückstandsfreies Entleeren des Laderaums als auch für eine reibungs- sowie geräuscharmes Verschieben der Rückwand vorgesehen sind. Die Dichtlippen sind hierbei bevorzugt aus einem elastischen Material, z. B. aus Gummi oder aus einem thermoplastischen Kunststoff, wie z. B. Polypropylen, gefertigt.

Nach einer weiteren vorteilhaften Ausgestaltung ist der zumindest eine Hydraulikzylinder des Schiebemechanismus mit einem Endabschnitt mit einem Traggestell und mit einem gegenüberliegenden Endabschnitt unmittelbar mit einer dem Laderaum abgewandten Seite der Rückwand gekoppelt.

Hierbei ist insbesondere vorgesehen, dass der Schiebemechanismus zumindest zwei mit Ihren jeweiligen Zylinderabschnitten unmittelbar miteinander gekoppelte, bevorzugt unmittelbar miteinander verbundene Hydraulikzylinder aufweist, die zueinander entgegengesetzt ausgerichtet sind. Das heißt, dass eine Kolbenstange eines ersten Hydraulikzylinders z. B. in Richtung der Ladekante ausfährt, während eine zweite Kolbenstange des zweiten Zylinders in eine der Ladekante entgegengesetzte Richtung ausfährt.

Hierbei ist ausschließlich die Kolbenstange des zweiten, z.B. nach hinten ausgerichteten Hydraulikzylinders mit dem Traggestell der Ladeeinrichtung verbunden, sodass im Zuge einer von den Hydraulikzylindern initiierten Verschiebebewegung der Rückwand die Hydraulikzylinder selbst eine Verschiebung in Richtung der Ladekante erfahren.

Von Vorteil sind die beiden miteinander verbundenen Hydraulikzylinder auch hydraulisch unmittelbar miteinander gekoppelt, sodass bei Beaufschlagung eines hydraulischen Drucks beide Kolbenstangen annähernd gleichzeitig bzw. synchron und mit gleicher Geschwindigkeit ausfahren.

Von Vorteil sind die Hydraulikzylinder ferner als doppelt wirkende Zylinder ausgebildet. Durch wechselseitige Beaufschlagung unterschiedlicher Zylinderabschnitte mit einem hydraulischen Druck können die Kolbenstangen jeweils aus den Zylinderabschnitten heraus- und auch wieder in diese hineingezogen werden, sodass mit ein und demselben Schiebemechanismus die als Schiebeschild fungierende Rückwand ohne weitere Hilfsmittel sowohl in Richtung Abladestellung als auch wieder zurück in ihre Ausgangsstellung verschoben werden kann.

Die zueinander entgegengesetzt ausgerichteten und unmittelbar miteinander verbundenen, jeweils einen Schiebemechanismus bildenden Hydraulikzylinder bauen in Verschieberichtung der Rückwand relativ kurz. Der Schiebemechanismus weist aber mit ausgefahrenen Kolbenstangen eine Erstreckung auf, die zumindest um die Summe der ausfahrbaren Länge der beiden Kolbenstangen größer ist als die Erstreckung des Schiebemechanismus mit eingefahrenen Kolbenstangen. Von Vorteil sind die beiden Hydraulikzylinder und ihre Kolbenstangen im Wesentlichen identisch ausgebildet.

Nach einer weiteren vorteilhaften Ausgestaltung ist ferner vorgesehen, dass die Rückwand über mehrere Schiebemechanismen am Traggestell verschiebbar geführt ist, wobei die Schiebemechanismen miteinander hydraulisch gekoppelt sind. Von Vorteil sind sämtliche Hydraulikzylinder sämtlicher Schiebemechanismen ein und demselben Hydraulikkreislauf zugeordnet, sodass auf jeden der Schiebemechanismen bevorzugt im Wesentlichen gleiche Verschiebekräfte wirken. Einem Verkanten oder Verklemmen der Rückwand an den seitlichen Führungen kann somit effektiv begegnet werden, insbesondere dann, wenn die Schiebemechanismen in etwa in gleicher Höhe sowie seitlich versetzt und beabstandet zueinander an der Rückwand angeordnet sind.

In Weiterbildung hiervon ist vorgesehen, dass die hydraulisch ausgebildeten Schiebemechanismen mittels eines Ölmerigenteilers miteinander gekoppelt sind. Die beiden, z.B. links und rechts mit der Rückwand gekoppelten Hydraulikzylinder sind jeweils mit einem eigenen Hydraulikzweig versehen, welch in den Ölmengenteiler münden. Mittels des Ölmengenteilers kann erreicht werden, dass selbst bei einem ungleichmäßigen Beladen des Laderaums, die beiden Hydraulikzylinder einen weitgehend identischen und synchronen Verschiebeweg aufweisen. Auf diese Art und Weise kann einem Verkanten der Rückwand vorgebeugt werden.

Die Ausbildung eines weitgehend vollständig hinter der Rückwand liegenden Schiebemechanismus ermöglicht in vorteilhafter Weise, etwa eine Streu- oder Fördereinheit mittels eines Tragrahmens schwenkbar am Traggestell zwischen einer Offnungs- und einer Förderstellung zu lagern. Der Tragrahmen der Streu- oder Fördereinheit ist hierbei bevorzugt an einem oberen Endabschnitt des hinter der Rückwand liegenden Traggestells angeordnet. Der Tragrahmen der Streu- oder Fördereinheit erstreckt sich dabei bevorzugt oberhalb des Laderaums nach vorn und kann einen sich in etwa parallel zur Rückwand in Höhe der Ladekante erstreckenden Tragrahmenabschnitt aufweisen, an welchem drehbar gelagerte Streu- oder Fräswalzen angeordnet sind.

Die zumindest eine, bevorzugt mehrere am Tragrahmen gelagerten Streuwalzen erstrecken sich hierbei bevorzugt parallel, quer und/oder senkrecht zur Ladekante der Schaufelvorrichtung. Von Vorteil erstreckt sich der die zumindest eine Streuwalze tragende Teil des Tragrahmens in seiner Förderstellung im Wesentlichen parallel zur Fläche der Rückwand und kommt hierbei im Bereich der vorderen Ladekante zu liegen.

Ein Drehantrieb der zumindest einen Streu- oder Fräswalze ist hierbei bevorzugt mit der Verschiebebewegung der Rückwand gekoppelt. Auf diese Art und Weise kann das im Laderaum befindliche Transportgut mittels der Rückwand nach vorn zur Ladekante befördert werden und dort mithilfe der sich bevorzugt oberhalb der Ladekante befindlichen und im Betreib drehenden Streuwalze homogen über eine Abladefläche verstreut werden. Eine derartige Ladeeinrichtung eignet sich hierbei insbesondere zur Verteilung von z. B. Futtermittel.

Zur Aufnahme von Transportgut kann hierbei insbesondere vorgesehen werden, die Streu- oder Fördereinheit in eine nach oben geklappte Beladestellung zu überführen, in welcher der von Seitenwangen, Ladeboden und Rückwand gebildete Laderaum von vorn frei zugänglich ist und etwa durch Einfahren in eine Schüttung von Transportgut besonders einfach beladen werden kann.

Nach einem Beladevorgang des Laderaums kann die Streu- oder Fördereinheit in ihre nach unten geklappte Förderstellung überführt werden, in welche sich der Tragrahmen nach einer weiteren Ausgestaltung zumindest mittels einer nach unten ragenden Stütze an der Ladekante abstützt. Jene Abstützung trägt zur mechanischen Stabilität der gesamten Ladeeinrichtung bei und entlastet den Tragrahmen der Streu- oder Fördereinheit.

Je nach Beschaffenheit des Transportguts kann aber auch eine andere Art des Be- und Entladens, z. B. ein zum Zwecke des Beladens des Laderaums vorgesehenes Abfräsen eines Futtermittelblocks vorgesehen werden. Hierbei können die Streu- oder Fräswalzen in umgekehrter Richtung, folglich zum Beschicken des Laderaums angetrieben werden.

Zur schwenkbaren Lagerung der Streu- oder Fördereinheit ist wenigstens ein Hydraulikzylinder in Höhe einer oberen Begrenzung der Rückwand am Traggestell gelagert. Der Tragrahmen kann hierbei selbst an einem vom Hydraulikzylinder beabstandeten Lager verschwenkt werden.

Weitere Ausgestaltungen der Erfindung sehen ferner einen Horizontalförderer vor, der z. B. am unteren Endabschnitt des Tragrahmens angeordnet ist und z. B. nach Art eines Förderbands, das über die Ladekante nach vorn ausgetragene Transportgut im Wesentlichen entlang der Ladekante befördert. Auf diese Art und Weise kann z. B. auch eine seitliche Entleerung der Ladeeinrichtung erzielt werden. Der Querförderer kann hierbei separat aber auch in Kombination mit den oberhalb der Ladekante liegenden Streuwalzen der Streu- oder Fördereinheit gekoppelt sein.

Weitere Ziele, Merkmale sowie vorteilhafte Weiterbildungen der Erfindung werden in der nachfolgenden Beschreibung eines Ausführungsbeispiels unter Bezugnahme auf die Zeichnungen erläutert. Hierbei bilden sämtliche im Text beschriebenen als auch in den Zeichnungen bildlich dargestellten Merkmale den Gegenstand der Erfindung.

Es zeigen:
- Fig. 1: eine perspektivische Darstellung der Ladeeinrichtung schräg von vorn,
- Fig. 2: die Ladeeinrichtung gemäß Fig. 1 in einer Seitenansicht von schräg oben,
- Fig. 3: die Ladeeinrichtung gemäß der Fig. 1 und 2 in einer Ansicht von schräg hinten,
- Fig. 4: die Ladeeinrichtung mit heruntergeklappter Streueinheit und mit einer in die Abladestellung verschobenen Rückwand, von der Seite betrachtet,
- Fig. 5: eine perspektivische Darstellung der Ladeeinrichtung mit einer teilweise hochgeklappten Streu- oder Fördereinheit,
- Fig. 6: die Ladeeinrichtung gemäß Fig. 5 mit heruntergeklappter, in Förderstellung befindlicher Streueinheit und
- Fig. 7: eine seitliche perspektivische Darstellung der Ladeeinrichtung mit einer nach oben verschwenkten Streueinheit.

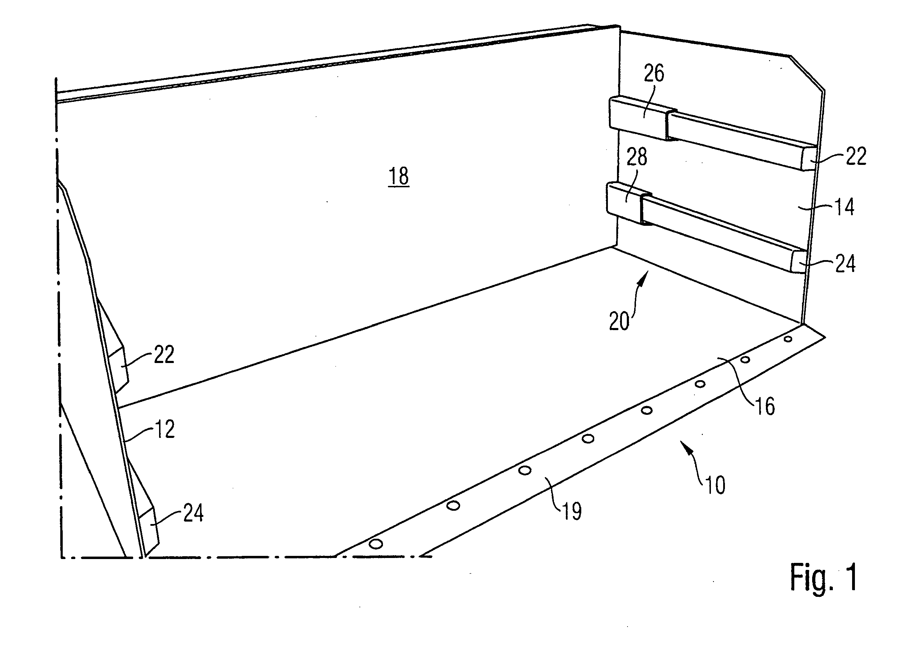

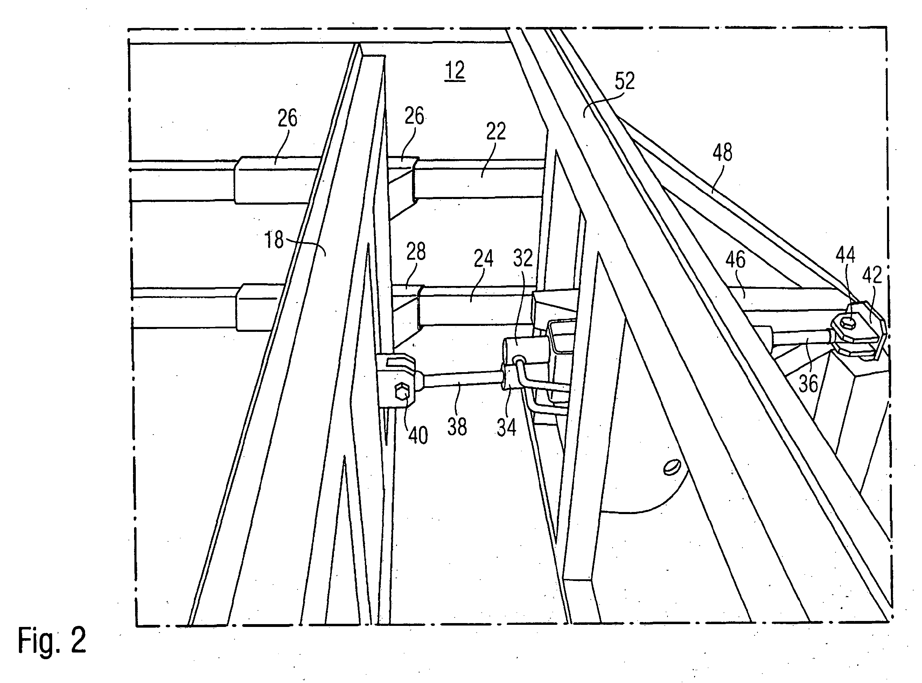

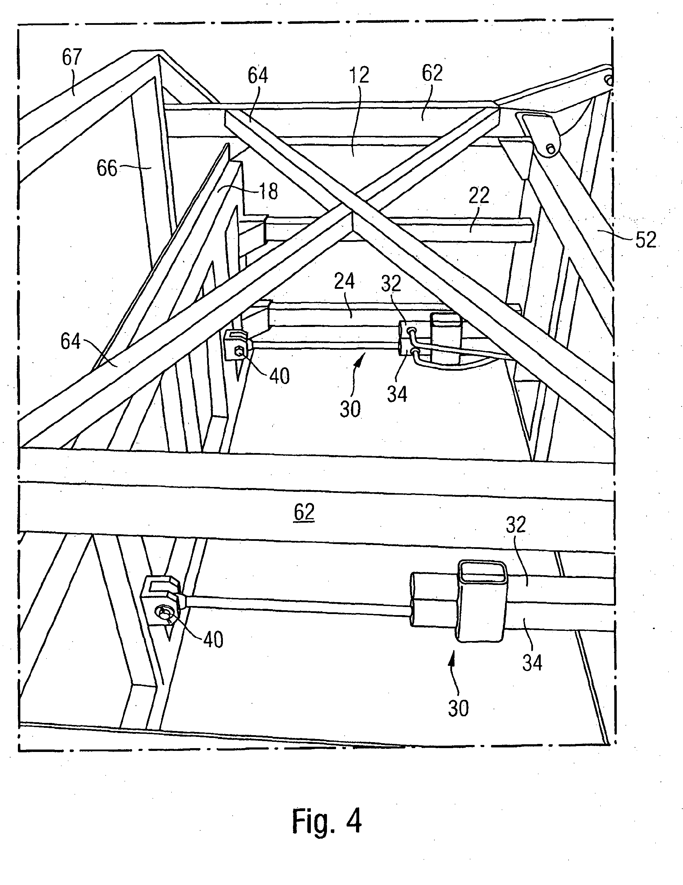

Die in den Figuren dargestellte Ladeeinrichtung ist zur Ankopplung an einen Front- oder Radlader ausgebildet. Sie weist eine Schaufelvorrichtung 10 auf, die einen unteren, im Wesentlichen eben ausgebildeten Ladeboden 16 sowie seitlich hieran angrenzende Seitenwangen 12, 14 aufweist. An einem hinteren, einer Ladekante 19 des Ladebodens 16 abgewandten Endabschnitt ist eine als Schiebeschild ausgebildete verschiebbare Rückwand 18 vorgesehen, die mittels einem in den Fig. 2 bis 4 näher dargestellten Schiebemechanismus 30 zwischen einer in Fig. 1 gezeigten Ausgangsstellung und einer in Fig. 4 gezeigten Abladestellung längsverschieblich an den Seitenwangen 12, 14 geführt ist.

Hierzu weisen die Seitenwangen 12, 14 jeweils ein oberes und ein unteres Führungsprofil 22, 24 auf, welches eine im Wesentlichen rechteckige Struktur hat und mit seitlichen, etwa C-förmig ausgebildeten, bevorzugt mit der Rückwand 18 verschweißten Profilaufnahmen 26, 28 korrespondiert, bzw. mit diesen in Eingriff steht.

Die von den Profilteilen 22, 24, 26, 28 gebildete seitliche Führung 20 ist insbesondere für ein geradliniges und ausschließlich translatorisches Verschieben der Rückwand 18 vorgesehen. Die Ladekante 19 ist ferner mit ihrem der Rückwand 18 abgewandten freien Enden nach unten angeschrägt und spitz zulaufend ausgebildet, um die Aufnahme von Transportgut in den Laderaum, etwa beim Einfahren in aufgeschüttetes oder gestapeltes Transportgut zu erleichtern.

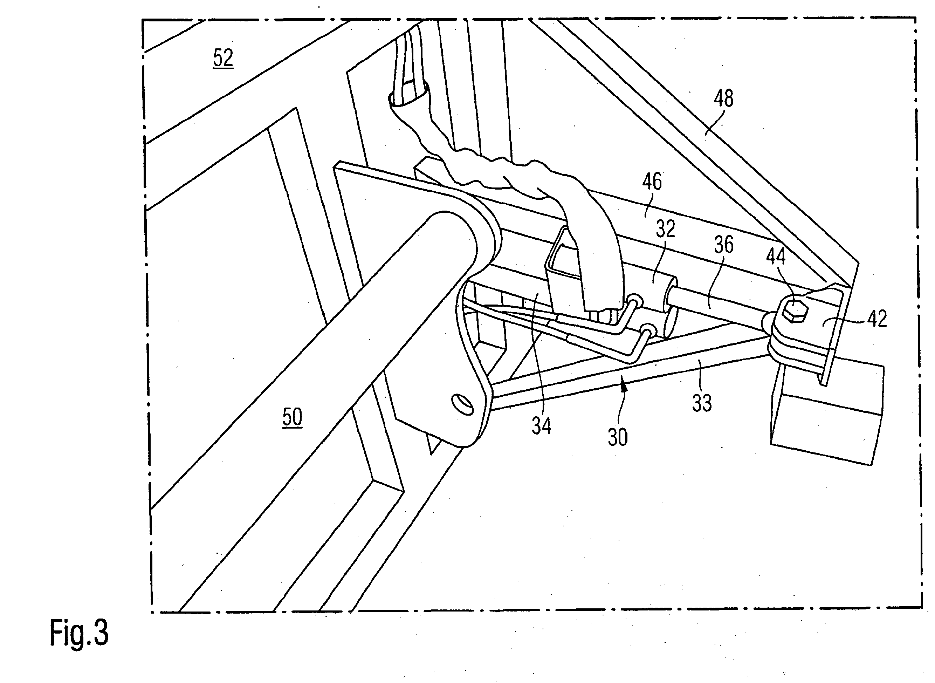

Wie in Fig. 4 dargestellt, ist die Rückwand 18 über zwei Schiebemechanismen 30 mit einem Traggestell 46, 48, 52 der Ladeeinrichtung verschiebbar gekoppelt. Die Schiebemechanismen 30 weisen hierfür jeweils zwei entgegengesetzt ausgerichtete, sich im Wesentlichen parallel zur Ebene des Ladebodens 16 erstreckende Hydraulikzylinder 32, 34 auf. Wie in Fig. 2 bis 4 verdeutlicht, sind die beiden Zylinderabschnitte 32, 34 der Hydraulikzylinder in etwa auf gleicher Höhe übereinanderliegend unmittelbar miteinander verbunden, jedoch in entgegengesetzten Richtungen ausgerichtet, sodass eine Kolbenstange 36 des oberen Hydraulikzylinders 32 am Traggestell 46, 48, die gegenüberliegende Kolbenstange 38 aber der Rückwand 18 zugewandt an einer dort vorgesehenen Aufnahme 40 angelenkt ist. Die Schaufeleinrichtung 10 kann ferner mittel der in Figur 3 gezeigten Kuppelstange 50 an einer entsprechend ausgebildeten Kupplung eines Front- oder Radladers lösbar angeordnet werden.

Bei Beaufschlagung beider Hydraulikzylinder 32, 34 fahren beide Kolbenstangen 36, 38 in entgegengesetzte Richtungen aus, sodass, insbesondere bedingt durch die Bewegung der Kolbenstange 36, beide miteinander verbundenen Hydraulikzylinderabschnitte 32, 34 in Richtung zur vorderen Ladekante 19 verschoben werden.

Durch die unmittelbare Kopplung entgegengesetzt ausgerichteter Hydraulikzylinder 32, 34 kann eine vergleichsweise geringe Bautiefe der Schiebemechanismen 30 erreicht werden, die aber eine um die Summe der Auszugslänge beider Kolbenstangen 36, 38 vergrößerte Maximalerstreckung aufweisen.

Das Traggestell, an welchem die Schaufelvorrichtung 10 befestigt ist, weist einen oberen Querträger 52 sowie einen nach hinten ragenden Längsträger 46 auf, die über eine Querstrebe 48 miteinander verbunden und dementsprechend ausgesteift sind. Am hinteren Endabschnitt des Traggestells ist eine Aufnahme bzw. eine Abstützung 42 für die Kolbenstange 36 des Hydraulikzylinders 32 vorgesehen, die an einem die Aufnahme 42 durchsetzenden Bolzen 44 gelagert ist.

Nach unten hin stützt der Längsträger 46 über eine weitere Querstrebe 33 ab, wobei die Neigung der Querstrebe 33 derart gewählt ist, dass insbesondere ein nach oben gerichtetes Verschwenken einer beladenen Schaufelvorrichtung 10 mit der Kuppelstange 50 als Schwenkachse kollisionslos von statten gehen kann. Von Seiten der Schaufelkonstruktiön ist darauf zu achten, dass mit Erreichen eines maximalen Schwenkwinkels der Schaufelvorrichtung 10 das der Abstützung 42 zugewandte Ende der Querstrebe 33 einen vorgegebenen Abstand zum Untergrund einhält.

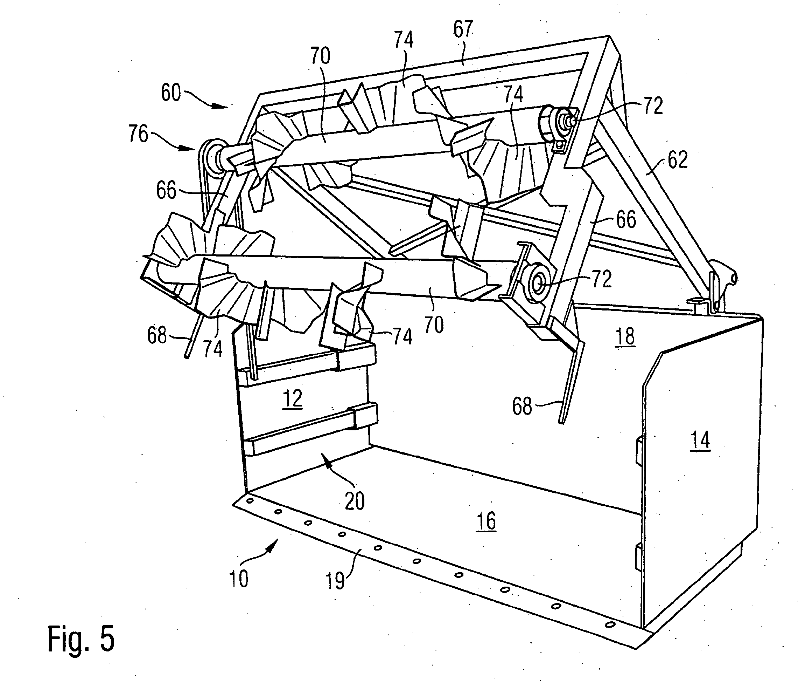

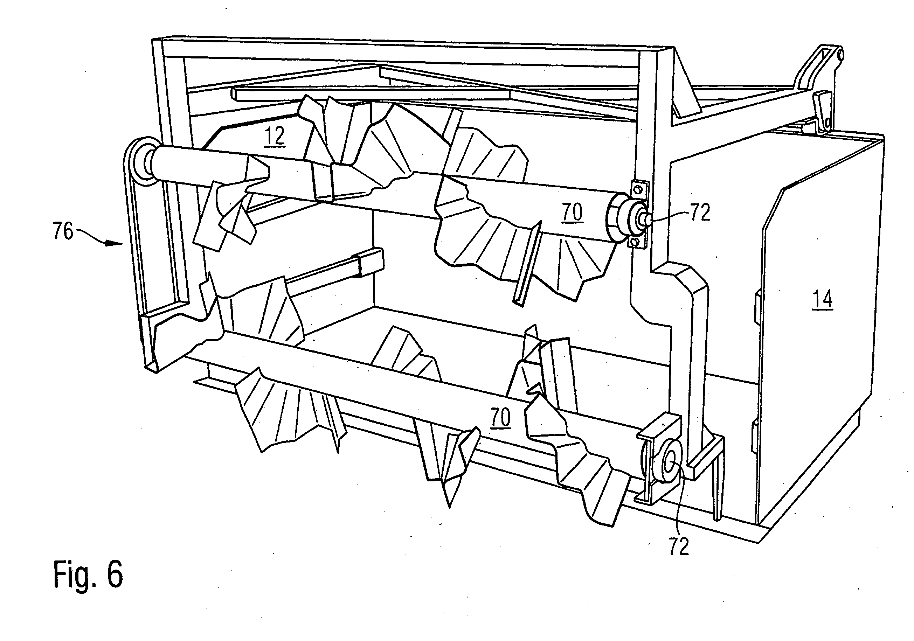

In den Fig. 4 bis 7 ist ferner eine optional an der Schaufelvorrichtung 10 schwenkbar angelenkte Streu- oder Fördereinheit 60 gezeigt. Diese weist einen Tragrahmen mit oberhalb des Laderaums zu liegen kommenden Längsträgern 62 auf, die über strukturversteifende Querstreben 64 sowie über einen vorderen Rahmenteil 66 bzw. über eine daran befestigte Querstrebe 67 miteinander verbunden sind. Der vordere Rahmenabschnitt 66, der sich in der in Fig. 6 heruntergeklappten Förderstellung im Wesentlichen parallel zur Rückwand 18 erstreckt, stützt sich mit nach unten ragenden und/oder nach innen versetzten Stützelementen 68 an der Ladekante 19 des Ladebodens 16 ab.

An dem Tragrahmenabschnitt 66 sind zudem horizontal gelagerte Streuwalzen 70 vorgesehen, die jeweils horizontal voneinander beabstandete, in sich gewellt ausgebildete Förderscheiben 74 aufweisen. Die Streuwalzen 70 sind hierbei an vertikal zueinander angeordneten Lagern 72 drehbar gelagert und im vorliegenden Ausführungsbeispiel an einer Seite, etwa mittels eines Kettentriebs 76 bevorzugt in unterschiedlichen Drehrichtungen variabel antreibbar.

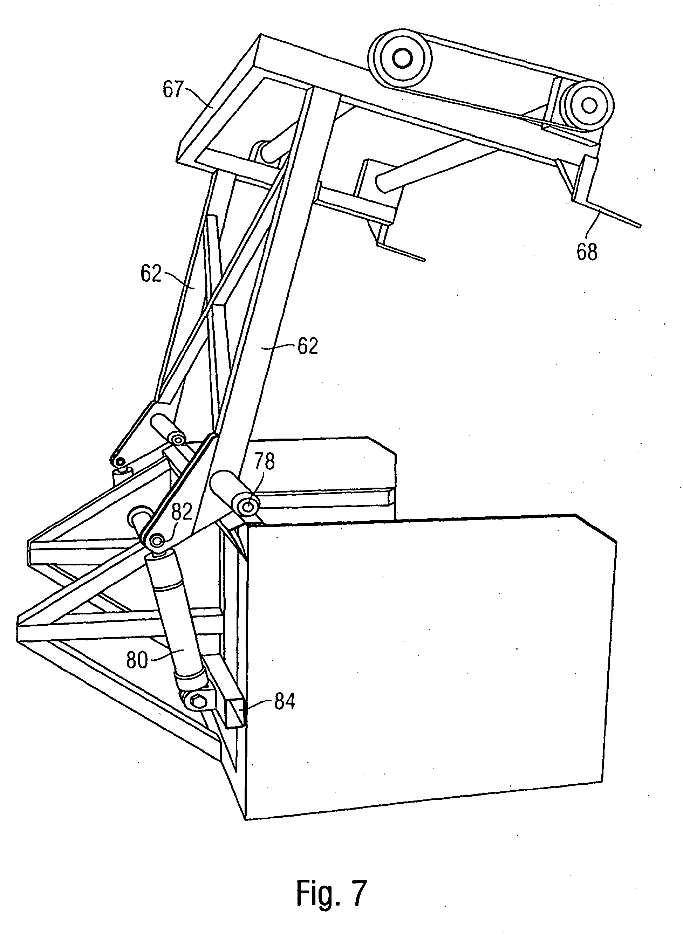

Zum Beladen der Schaufelvorrichtung kann die Streu- oder Fördereinheit 60 in ihre in Fig. 7 dargestellte hochgeklappte Stellung überführt werden. Die mit einem Front- oder Radlader gekoppelte Schaufelvorrichtung kann sodann z.B. in einen Haufen aufgeschütteten Transportguts hineingefahren werden. Zum Abtransport und zum Austragen des Transportgutes kann alsdann die Streu- oder Fördereinheit 60 in ihrer in Fig. 6 dargestellte heruntergeklappte Stellung überführt werden, wobei das Hoch- oder Runterklappen über einen weiteren in Fig. 7 dargestellten Hydraulikzylinder 80 erfolgen kann, der beabstandet von einem Lager 78 an einem freien Ende eines Hebelarms 82 angelenkt ist, der starr mit den Tragrahmen bzw. mit dessen Längsträgern 62 verbunden ist.

Zum Austragen aufgenommenen Transportgutes können die Streuwalzen 70 kombiniert mit einer nach vorn zur Ladekante 19 hin gerichteten Verschiebebewegung der Rückwand 18 in Bewegung gesetzt werden, um das aufgenommene Transportgut möglichst gleichmäßig auszutragen und zu verteilen. Die Streu- oder Fördereinheit kann aber auch z. B. zum Beladen der Schaufelvorrichtung 10 Verwendung finden, um z. B. verdichtetes Transportgut von einem aufgeschütteten Haufen oder Block abzufräsen und in den Aufnahmeraum der Schaufelvorrichtung zu befördern.

### Bezugszeichenliste

- 10: Schaufelvorrichtung
- 12: Wange
- 14: Wange
- 16: Ladeboden
- 18: Rückwand
- 19: Ladekante
- 20: Führung
- 22: Führungsprofil
- 24: Führungsprofil
- 26: Profilaufnahme
- 28: Profilaufnahme
- 30: Schiebemechanismus
- 32: Hydraulikzylinder
- 34: Hydraulikzylinder
- 36: Kolbenstange
- 38: Kolbenstange
- 40: Aufnahme
- 42: Aufnahme
- 44: Bolzen
- 46: Längsträger
- 48: Strebe
- 50: Kupplungsstange
- 52: Querträger
- 60: Streu- oder Fördereinheit
- 62: Längsträger
- 64: Querstrebe
- 67: Querträger
- 68: Stütze
- 70: Streu- oder Förderwalze
- 72: Lager
- 74: Förderscheibe
- 76: Kettentrieb
- 78: Lager
- 80: Hydraulikzylinder
- 82: Lager
- 84: Träger

## Patentansprüche

1. Ladeeinrichtung für landwirtschaftliches Transportgut, insbesondere für Schüttgut, mit einer Schaufelvorrichtung (10), die zur Bildung eines Laderaums, einen eine vordere Ladekante (19) aufweisenden Ladeboden (16) und zwei seitlich hieran angrenzende Wangen (12, 14) sowie eine als Schiebeschild ausgebildete Rückwand (18) aufweist, die zwischen einer der Ladekante (19) abgewandten Ausgangsstellung und einer der Ladekante (19) zugewandten Ablagestellung an den gegenüberliegenden Wangen (12, 14) mittels eines Schiebemechanismus (30) verschiebbar geführt ist, **dadurch gekennzeichnet, dass** der Schiebemechanismus (30) zumindest zwei im Wesentlichen parallel zum Ladeboden (18) ausgerichtete und mit ihren Zylinderabschnitten unmittelbar miteinander gekoppelte Hydraulikzylinder (32, 34) aufweist, die zueinander entgegengerichtet ausgerichtet sind und wobei die Kolbenstange (36) eines Hydraulikzylinders (32) mit einem Traggestell (46) und die Kolbenstange (38) des anderen Hydraulikzylinders (34) mit einer dem Ladeboden (16) abgewandten Seite der Rückwand (18) gekoppelt ist.

2. Ladeeinrichtung nach Anspruch 1, wobei die Rückwand (18) translatorisch und/oder geradlinig an den gegenüberliegenden Wangen (12, 14) geführt ist.

3. Ladeeinrichtung nach einem der vorhergehenden Ansprüche, wobei die Wangen (12,14) zumindest ein sich in Verschieberichtung erstreckendes Führungsprofil (22, 24) aufweisen, welches mit zumindest einer korrespondierenden, seitlich an der Rückwand vorgesehenen Profilaufnahme (26, 28) in Eingriff steht.

4. Ladeeinrichtung nach einem der vorhergehenden Ansprüche, wobei der Ladeboden (16) im Wesentlichen eben ausgebildet ist.

5. Ladeeinrichtung nach einem der vorhergehenden Ansprüche, wobei die Kolbenstangen (36, 38) der miteinander gekoppelten Hydraulikzylinder (32, 34) in entgegensetzter Richtung aus dem jeweils zugeordneten Zylinder ausfahrbar sind.

6. Ladeeinrichtung nach einem der vorhergehenden Ansprüche, wobei die Hydraulikzylinder (32, 34) als doppeltwirkende Zylinder ausgebildet sind.

7. Ladeeinrichtung nach einem der vorhergehenden Ansprüche, wobei die Rückwand (18) über mehrere Schiebemechanismen (30) am Traggestell (46) verschiebbar geführt ist und wobei die Schiebemechanismen (30) miteinander hydraulisch gekoppelt sind.

8. Ladeeinrichtung nach einem der vorhergehenden Ansprüche, ferner mit einer Streu- oder Fördereinheit (60), welche mittels eines Tragrahmens (62, 66, 67) schwenkbar am Traggestell (46) zwischen einer Öffnungs-und einer Förderstellung gelagert ist.

9. Ladeeinrichtung nach Anspruch 8, wobei die Streu- und Fördereinheit (60) zumindest eine sich parallel, quer und/oder senkrecht zur Ladekante (19) erstreckende Streuwalze (70) aufweist, die drehbar am Tragrahmen (67) gelagert ist.

10. Ladeeinrichtung nach einem der vorhergehenden Ansprüche 8 oder 9, wobei sich der die Streuwalze (70) tragende Teil des Tragrahmens (67) in seiner Förderstellung im Wesentlichen parallel zur Fläche der Rückwand (18) erstreckt und im Bereich der vorderen Ladekante (19) zu liegen kommt.

11. Ladeeinrichtung nach einem der vorhergehenden Ansprüche 8 bis 10, wobei sich der Tragrahmen (62, 66, 67) in seiner Förderstellung mittels zumindest einer nach unten ragenden Stütze (68) an der vorderen Ladekante (19) abstützt.

12. Ladeeinrichtung nach einem der vorhergehenden Ansprüche 8 bis 11, wobei der Tragrahmen (62, 66, 67) mittels wenigstens einem Hydraulikzylinder (80) in Höhe einer oberen Begrenzung der Rückwand (18) am Traggestell (46, 52) gelagert ist.

## Claims

1. Loading installation for agricultural goods to be transported, in particular for bulk goods, having a shovel device (10) which, for forming a loading space, includes a loading floor (16) including a front loading edge (19) and two sides (12, 14) adjoining laterally thereto, and a rear wall (18) configured as a displacement plate, which by means of a displacement mechanism (30) is displaceably guided on the mutually opposite sides (12, 14) between an initial position which is remote from the loading edge (19) and an unloading position which is proximate to the loading edge (19), **characterized in that** the displacement mechanism (30) includes at least two hydraulic cylinders (32, 34) which are substantially aligned so as to be parallel with the loading floor (18) and which, by way of their cylinder portions, are immediately intercoupled and which are aligned so as to be mutually opposed, and wherein the piston rod (36) of one hydraulic cylinder (32) is coupled to a support frame (46) and the piston rod (38) of the other hydraulic cylinder (34) is coupled to a side of the rear wall (18) which faces away from the loading floor (16).

2. Loading installation according to Claim 1, wherein the rear wall (18) is guided on the mutually opposite sides (12, 14) in a translatory and/or linear manner.

3. Loading installation according to one of the preceding claims, wherein the sides (12, 14) include a guide profile (22, 24) which extends in the displacement direction and which engages with at least one corresponding profile accommodation (26, 28) which is laterally provided on the rear wall.

4. Loading installation according to one of the preceding claims, wherein the loading floor (16) is configured so as to be substantially planar.

5. Loading installation according to one of the preceding claims, wherein the piston rods (36, 38) of the intercoupled hydraulic cylinders (32, 34) are extendable in opposite directions from the respectively assigned cylinder.

6. Loading installation according to one of the preceding claims, wherein the hydraulic cylinders (32, 34) are configured as dual-action cylinders.

7. Loading installation according to one of the preceding claims, wherein the rear wall (18) is guided so as to be displaceable on the support frame (46) by a plurality of displacement mechanisms (30), and wherein the displacement mechanisms (30) are hydraulically intercoupled.

8. Loading installation according to one of the preceding claims, furthermore having a spreading or conveying unit (60) which is mounted by means of a support rack (62, 66, 67) on the support frame (46) so as to be pivotable between an opening position and a conveying position.

9. Loading installation according to Claim 8, wherein the spreading and conveying unit (60) includes at least one spreading roller (70) which extends so as to be parallel with, transverse and/or perpendicular to the loading edge (19) and which is rotatably mounted on the support rack (67).

10. Loading installation according to one of preceding Claims 8 and 9, wherein that part of the support rack (67) that supports the spreading roller (70) in its conveying position extends substantially parallel with the face of the rear wall (18) and comes to lie in the region of the front loading edge (19).

11. Loading installation according to one of preceding Claims 8 to 10, wherein the support rack (62, 66, 67) in its conveying position is supported on the front loading edge (19) by means of at least one downwardly protruding stanchion (68).

12. Loading installation according to one of preceding Claims 8 to 11, wherein the support rack (62, 66, 67) is mounted on the support frame (46, 52) at the height of an upper delimitation of the rear wall (18) by means of at least one hydraulic cylinder (80).

## Revendications

1. Système de chargement pour produits agricoles à transporter, en particulier pour des produits en vrac, comprenant un dispositif à pales (10) qui présente, pour former un espace de chargement, un fond de chargement (16) présentant un bord de chargement avant (19) et deux parois (12, 14) adjacentes latéralement à celui-ci, ainsi qu'une paroi arrière (18) réalisée sous forme de panneau coulissant, qui est guidée au niveau des parois opposées (12, 14) au moyen d'un mécanisme de déplacement (30) de manière à pouvoir coulisser entre une position de sortie opposée au bord de chargement (19) et une position de déchargement tournée vers le bord de chargement (19), **caractérisé en ce que** le mécanisme de déplacement (30) présente au moins deux vérins hydrauliques (32, 34) orientés essentiellement parallèlement au fond de chargement (18) et accouplés l'un à l'autre directement par leurs sections cylindriques, lesquels sont orientés en sens inverse l'un de l'autre et où la tige de piston (36) d'un vérin hydraulique (32) est accouplée à un bâti porteur (46) et la tige de piston (38) de l'autre vérin hydraulique (34) est accouplée à un côté de la paroi arrière (18) opposé au fond de chargement (16).

2. Système de chargement selon la revendication 1, dans lequel la paroi arrière (18) est guidée en translation et/ou en ligne droite au niveau des parois opposées (12, 14).

3. Système de chargement selon l'une quelconque des revendications précédentes, dans lequel les parois (12, 14) présentent au moins un profilé de guidage (22, 24) s'étendant dans la direction de coulissement, lequel est en prise avec au moins un logement de profilé (26, 28) correspondant, prévu latéralement au niveau de la paroi arrière.

4. Système de chargement selon l'une quelconque des revendications précédentes, dans lequel le fond de chargement (16) est réalisé sous forme essentiellement plane.

5. Système de chargement selon l'une quelconque des revendications précédentes, dans lequel les tiges de piston (36, 38) des vérins hydrauliques (32, 34) accouplés l'un à l'autre peuvent être sorties du vérin respectivement associé dans des directions opposées.

6. Système de chargement selon l'une quelconque des revendications précédentes, dans lequel les vérins hydrauliques (32, 34) sont réalisés sous forme de vérins à double effet.

7. Système de chargement selon l'une quelconque des revendications précédentes, dans lequel la paroi arrière (18) est guidée de manière à pouvoir coulisser sur le bâti porteur (46) par le biais de plusieurs mécanismes de déplacement (30) et où les mécanismes de déplacement (30) sont accouplés hydrauliquement les uns aux autres.

8. Système de chargement selon l'une quelconque des revendications précédentes, comprenant en outre une unité de dispersion ou de transport (60) qui est supportée au moyen d'un châssis porteur (62, 66, 67) de manière à pouvoir pivoter sur le bâti porteur (46) entre une position d'ouverture et une position de transport.

9. Système de chargement selon la revendication 8, dans lequel l'unité de dispersion et de transport (60) présente au moins un rouleau de dispersion (70) s'étendant parallèlement, transversalement et/ou perpendiculairement au bord de chargement (19), lequel est supporté de manière à pouvoir tourner sur le châssis porteur (67).

10. Système de chargement selon l'une quelconque des revendications précédentes 8 ou 9, dans lequel la partie du châssis porteur (67) portant le rouleau de dispersion (70), dans sa position de transport, s'étend essentiellement parallèlement à la surface de la paroi arrière (18) et vient se placer dans la région du bord de chargement avant (19).

11. Système de chargement selon l'une quelconque des revendications précédentes 8 à 10, dans lequel le châssis porteur (62, 66, 67), dans sa position de transport, s'appuie contre le bord de chargement avant (19) au moyen d'au moins un montant (68) saillant vers le bas.

12. Système de chargement selon l'une quelconque des revendications précédentes 8 à 11, dans lequel le châssis porteur (62, 66, 67) est supporté sur le bâti porteur (46, 52) au moyen d'au moins un vérin hydraulique (80) à la hauteur d'une limitation supérieure de la paroi arrière (18).
